# FASCICULE DE BREVET EUROPEEN

(11) **EP 3 473 836 B1**
(45) Date de publication et mention de la délivrance du brevet: **08.07.2020**
(21) Numéro de dépôt: 18197111.0
(22) Date de dépôt: 27.09.2018
(51) Int. Cl.: F02C 7/266, F23Q 23/10

(54) **SYSTÈME D'ALLUMAGE D'UNE TURBOMACHINE D'AÉRONEF**
ZÜNDSYSTEM EINES TURBOTRIEBWERKS EINES LUFTFAHRZEUGS
IGNITION SYSTEM OF AN AIRCRAFT TURBINE ENGINE

(30) Priorité: 23.10.2017 FR 1759950
(43) Date de publication de la demande: 24.04.2019
(73) Titulaire: Airbus Operations S.A.S., 31060 Toulouse (FR)
(72) Inventeur: AMBROISE, Richard, 31330 Merville (FR); COLLAS, Richard, 31530 Bellegarde Sainte Marie (FR)
(74) Mandataire: Gicquel, Olivier Yves Gérard

(56) Documents cités:
- EP-A2- 0 226 302
- EP-A2- 0 501 152
- FR-A1- 2 717 534
- US-A1- 2015 322 863

## Description

La présente invention concerne un système d'allumage d'une turbomachine d'aéronef.

Un système d'allumage d'une turbomachine comprend une bougie d'allumage arrangée dans une chambre de combustion de la turbomachine et un dispositif excitateur de la bougie qui comporte notamment un dispositif électronique d'accumulation d'énergie et un circuit de commande afin de libérer l'énergie accumulée vers la bougie.

Le dispositif excitateur de la bougie est relié à l'unité de contrôle de la turbomachine (de type FADEC : Full Authority Digital Engine Control ou calculateur de contrôle et de régulation de la turbomachine) qui assure le fonctionnement de la turbomachine, et notamment la gestion de l'excitation de la bougie. Dans le principe de fonctionnement, l'unité de contrôle de la turbomachine est configurée pour fournir un signal d'activation au circuit de commande du dispositif excitateur, provoquant ainsi la libération de l'énergie accumulée vers la bougie.

Les équipes de maintenance au sol contrôlent le fonctionnement du système d'allumage d'une turbomachine d'aéronef en procédant, lors d'inspections planifiées régulièrement, à des tests électriques des composants dudit système. De telles opérations sont longues à mettre en œuvre car elles nécessitent des manipulations afin d'avoir accès aux différents composants du système d'allumage.

Un des objectifs de la présente invention est de faciliter la détection de panne du système d'allumage.

L'invention vise à répondre à ce besoin et concerne un système d'allumage d'une turbomachine, ledit système comprenant une bougie d'allumage ayant une borne dite d'excitation et une borne dite de retour, un dispositif excitateur de la bougie connectée à la borne d'excitation de la bougie, la borne de retour étant, un utilisation, connectée à une structure de la turbomachine formant référence équipotentielle, le dispositif excitateur étant, en utilisation, connecté à une ligne de commande et à une source d'alimentation électrique fournissant un signal d'excitation à la bougie à la réception d'un signal d'excitation sur la ligne de commande,
le système d'allumage comprenant un dispositif de contrôle comprenant un capteur de courant, un capteur de tension, un premier comparateur recevant en entrée un signal généré par le capteur de tension, un second comparateur recevant en entrée un signal généré par le capteur de courant, et un microcontrôleur recevant la sortie des deux comparateurs, le premier comparateur étant configuré pour comparer la valeur de l'amplitude du signal généré par le capteur de tension à une première valeur de référence et le second comparateur étant configuré pour comparer la valeur du signal généré par le capteur de courant à une seconde valeur de référence, le microcontrôleur mettant en œuvre une porte logique ET dont la sortie est un signal indicateur d'un dysfonctionnement du système d'allumage si la valeur de l'amplitude du signal généré par le capteur de courant est inférieure à la seconde valeur de référence alors que la valeur de l'amplitude du signal généré par le capteur de tension est supérieure à la première valeur de référence.

L'intégration d'un tel dispositif de contrôle dans un système d'allumage permet d'obtenir un état de santé de ce dernier plus aisément.

L'invention concerne également un procédé de détection d'un dysfonctionnement du système d'allumage d'une turbomachine mis en œuvre par un dispositif de contrôle, ledit système d'allumage comprenant une bougie d'allumage ayant une borne dite d'excitation et une borne dite de retour, un dispositif excitateur de la bougie connectée à la borne d'excitation de la bougie, la borne de retour étant, un utilisation, connectée à une structure de la turbomachine formant référence équipotentielle, le dispositif excitateur étant, en utilisation, connecté à une ligne de commande et à source d'alimentation électrique fournissant un signal d'excitation à la bougie à la réception d'un signal d'excitation sur la ligne de commande,
le dispositif de contrôle comprenant un capteur de courant, un capteur de tension, un premier comparateur connecté au capteur de tension, un second comparateur connecté au capteur de courant, et un microcontrôleur recevant la sortie des deux comparateurs,
le procédé comprenant les étapes suivantes de :
- mesure d'une tension par le capteur de tension, ledit capteur générant un signal image de ladite tension ;
- mesure d'un courant par le capteur de courant, ledit capteur générant un signal image dudit courant ;
- comparaison, par le premier comparateur, de l'amplitude du signal généré par le capteur de tension avec une première valeur de de référence ;
- comparaison, par le second comparateur, de l'amplitude du signal généré par le capteur de courant avec une seconde valeur de de référence ;
- surveillance, par le microcontrôleur, de l'état du signal de sortie du premier comparateur et de l'état du signal de sortie du second comparateur ;
- génération, par le microcontrôleur, d'un signal indicateur d'un dysfonctionnement du système d'allumage si la valeur de l'amplitude du signal généré par le capteur de courant est inférieure à la seconde valeur de référence alors que la valeur de l'amplitude du signal généré par le capteur de tension est supérieure à la première valeur de référence.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1 représente un aéronef comportant une turbomachine à laquelle est associée un système d'allumage selon un mode de réalisation de l'invention ;
- la figure 2 représente un schéma électrique du système d'allumage selon un mode de réalisation de l'invention, le système d'allumage comprenant un dispositif de contrôle du fonctionnement dudit système ;
- la figure 3 est un schéma représentant les étapes mises en œuvre par le dispositif de contrôle pour contrôler le fonctionnement d'un système d'allumage selon l'invention;
- la figure 4 est une courbe intensité-différence de potentiels montrant le profil électrique nominal d'une bougie du système d'allumage représenté à la figure 2; et
- la figure 5 est une vue similaire à la figure 2 représentant un schéma électrique du système d'allumage selon un autre mode de réalisation de l'invention.

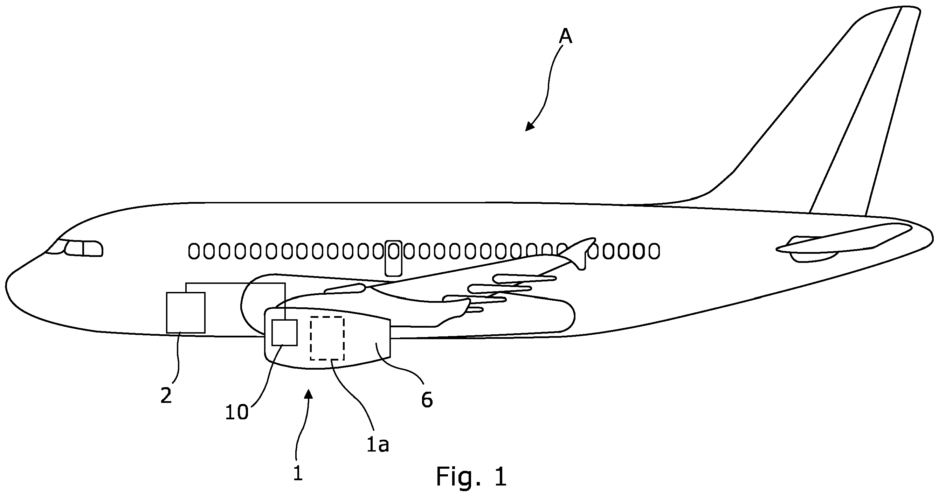

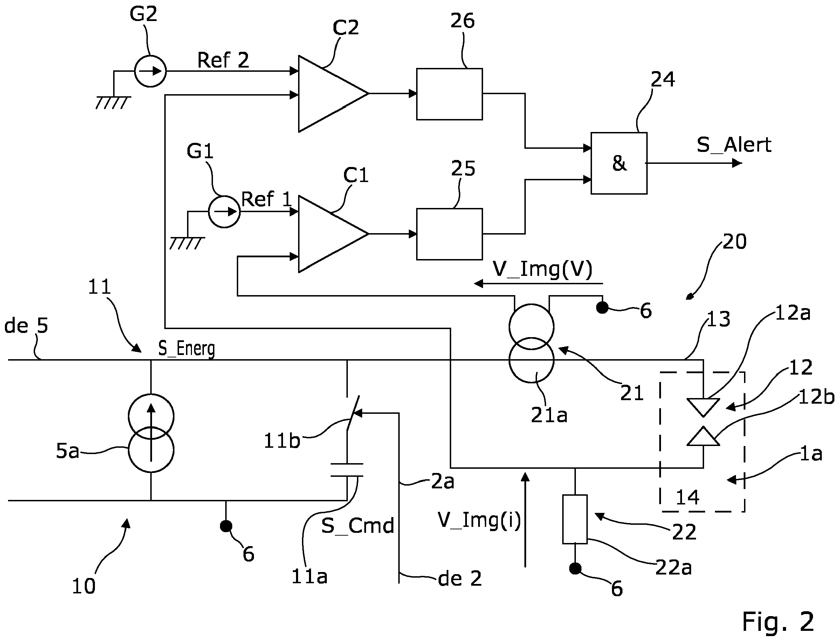

En relation avec les figures 1 et 2, un aéronef A comporte une turbomachine 1 et une unité de contrôle 2 de la turbomachine (de type FADEC) pour contrôler et surveiller le fonctionnement de la turbomachine 1 et qui peut être arrangée dans la turbomachine ou en alternative, dans l'aéronef. La turbomachine 1 est associée à au moins un système d'allumage 10 (généralement deux) connecté à l'unité de contrôle 2 assurant l'allumage du mélange air-carburant présent dans la chambre de combustion 20 de la turbomachine.

Chaque système d'allumage 10 comprend, un dispositif excitateur 11 connecté à une source d'alimentation électrique 5 de l'aéronef et à une structure de la turbomachine 6 (par exemple un châssis métallique) formant une référence équipotentielle, et une bougie d'allumage 12 arrangée dans la chambre de combustion 20 de la turbomachine.

La bougie d'allumage 12 comprend une borne dite d'excitation 12a et une borne dite de retour 12b. La borne d'excitation 12a est relié au dispositif excitateur 11 via une liaison électrique 13, et la borne de retour 12b est connectée à la structure de la turbomachine 6 via une liaison électrique 14.

Dans un exemple de réalisation dans lequel le dispositif excitateur 11 est à technologie capacitive, la source d'alimentation électrique 5 de l'aéronef est une source de tension (alternative ou continue) et le dispositif excitateur 11 comprend :
- un circuit 5a (réalisé via des transistors) pour transformer la source de tension 5 en source de courant alternatif (le circuit 5a est schématisé par une source de courant sur les figures)
- un dispositif de commutation 11b (par exemple de type interrupteur à caractéristique en i/V ou de type commutateur à état solide)
- un condensateur accumulateur 11a dont une borne est connectée au circuit 5a et à la borne d'excitation 12a de la bougie 12 et une autre borne est connectée à la structure de la turbomachine 6 via le dispositif de commutation 11b.

Le dispositif de commutation 11b est connecté à l'unité de contrôle 2 au moyen d'une ligne de commande 2a, via laquelle, par l'envoi d'un signal d'activation S_Cmd, l'unité de contrôle 2 peut déclencher le dispositif de commutation 11b (déclenchement = ouverture du dispositif de commutation) afin que le condensateur accumulateur 11a se décharge dans la bougie 12 et que cette dernière produise des étincelles en réponse à la décharge du condensateur 11a.

De manière connue, le dispositif exciteur 11 d'un système d'allumage 10 d'une turbomachine est dimensionné pour générer, en fonctionnement nominal, des tensions de l'ordre de 4000 à 6000 Volts pour des intensités maximales de l'ordre de 1200 Ampères.

Selon l'invention, le système d'allumage 10 comprend en outre un dispositif de contrôle 20 du système d'allumage 10 ayant pour fonction de vérifier, lorsqu'une tension d'excitation est fournie par le dispositif excitateur 11, le bon fonctionnement du système d'allumage 10.

En relation avec la figure 2 dans lequel le dispositif de contrôle 20 est du type analogique-numérique, ledit dispositif comprend un capteur de tension 21, un capteur de courant 22 ,un comparateur analogique C1 (par exemple un amplificateur opérationnel) recevant un signal V_Img(V) du capteur de tension 21, un comparateur analogique C2 (par exemple un amplificateur opérationnel) recevant un signal V_Img(i) du capteur de courant 22, un microcontrôleur 24 et des convertisseurs analogiques-numériques 25,26 où chaque convertisseur est connecté en sortie d'un comparateurs C1,C2, entre ce dernier et le microcontrôleur 24. Les capteurs 21,22 sont dimensionnés pour fournir une tension de sortie admissible pour les convertisseurs analogiques-numériques 25,26 (typiquement de l'ordre de 0 à 5,5V, voir de 3,3V) et les comparateurs C1, C2.

Les capteurs de tension/courant 21,22 que comprend le dispositif de contrôle sont de technologies adaptées pour supporter des tensions et intensité fournie par le dispositif excitateur 11, ainsi que pour supporter de fortes variations de température (forte variation de la température durant un vol du fait des variations d'altitudes). A titre d'exemple, comme cela est représenté sur la figure 2, le capteur de courant 22 est un shunt 22a arrangé arrangé entre la bougie 12 et la structure de la turbomachine 6, tandis que le capteur de tension 21 est par exemple un transformateur de tension 21a de type inductif arrangé entre le dispositif excitateur 11 et la bougie 12. D'autre type de capteurs pourraient convenir, par exemple un diviseur resistif pour le capteur de tension ou un capteur à effet Hall pour le capteur de courant.

Le capteur de courant comme le capteur de tension génère une tension dont l'amplitude est, respectivement, l'image de la valeur du courant V_img(i) dans la liaison descendante 14 et l'image de la tension V_img(V) dans la liaison montante 13.

Le premier comparateur C1 reçoit, en entrées, le signal V_img(V) généré par le capteur de tension 21 et un signal fourni par un générateur de tension continue G1et dont l'amplitude forme une première valeur de référence Ref1. Le premier comparateur C1 est configuré pour émettre un signal de tension non nulle si l'amplitude du signal V_img(V) est supérieure à la première valeur de référence Ref1, ou de tension nulle sinon. Le convertisseur analogique-numérique 25 reçoit le signal de sortie du premier comparateur C1 et le convertit en signal numérique.

Le second comparateur C2 reçoit, en entrées, le signal V_img(i) généré par le capteur de courant 22 et un signal fourni par un générateur de tension continue G2 et dont l'amplitude forme une seconde valeur de référence Ref2. Le second comparateur C2 est configuré pour émettre un signal de tension non nulle si l'amplitude du signal V img(i) est inférieure à la seconde valeur de référence Ref2, ou de tension nulle sinon. Le convertisseur analogique-numérique 26 reçoit le signal de sortie du second comparateur C2 et le convertit en signal numérique.

Le microcontrôleur 24, reçoit les signaux de sortie des deux comparateurs, convertis en signaux numériques par les convertisseurs analogique-numérique 25,26 dans ce cas de figure où les comparateurs sont analogiques. Le microcontrôleur 24 est de type unité centrale comprenant un processeur et des mémoires dans lesquelles sont enregistrées des instructions/logiques (par exemple programmation de porte logique) qui doivent être mises en œuvre par le processeur durant le fonctionnement du microcontrôleur 24.

Le microcontrôleur 24 met en œuvre, par exemple, une porte logique ET 34 recevant en entrées les signaux de sorties des comparateurs C1, C2, convertis en signaux numériques par les convertisseurs analogique-numériques 25,26. La porte logique ET génère un signal booléen S_Alert qui forme le signal de sortie du microcontrôleur. Le signal S_Alert est un signal indicateur :
- indicateur d'un bon fonctionnement (signal S_Alert mis à 0) du système d'allumage 10 si la valeur de l'amplitude du signal V img(i) généré par le capteur de courant 22 est supérieure à la seconde valeur de référence Ref2 quand la valeur de l'amplitude du signal V_img(V) généré par le capteur de tension 21 est supérieure à la première valeur de référence Ref2 ;
- indicateur d'un dysfonctionnement (signal S_Alert mis à 1) du système d'allumage 10 si la valeur de l'amplitude du signal V img(i) généré par le capteur de courant 22 est inférieure à la seconde valeur de référence Ref2 quand la valeur de l'amplitude du signal V img(V) généré par le capteur de tension 21 est supérieure à la première valeur de référence Ref1.

Le signal S_Alert émis par le microcontrôleur 24 est par exemple envoyé à l'unité de contrôle 2 pour traitement et affichage d'un statut du système d'allumage 10 sur un afficheur dédié (non représenté) pour alerter les équipes de maintenance au sol.

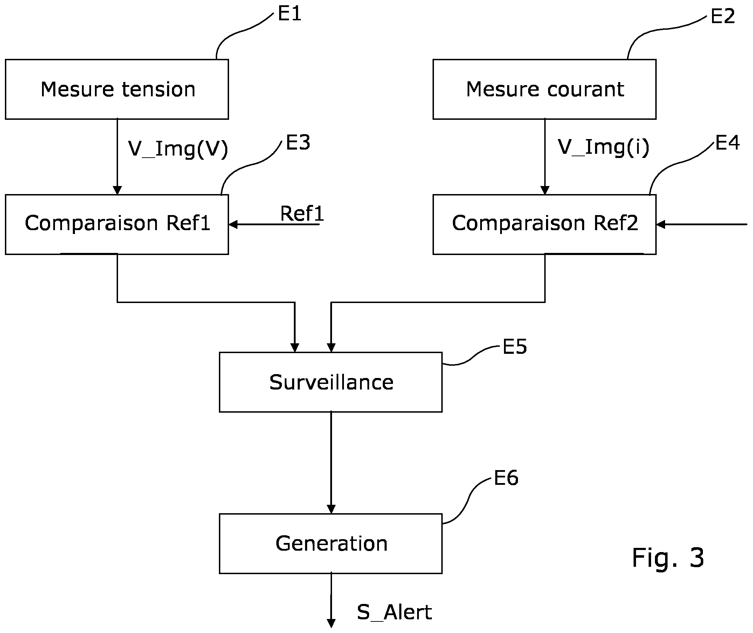

En référence avec la figure 3, le procédé de détection d'un dysfonctionnement du système d'allumage 10 mis en œuvre par le dispositif de contrôle 20 comprend donc les étapes suivantes de :
- E1 : mesure d'une tension par le capteur de tension 21, ledit capteur générant un signal V_img(V) image de ladite tension ;
- E2 : mesure d'un courant par le capteur de courant 22, ledit capteur générant un signal V_img(i) image dudit courant ;
- E3 : comparaison, par le premier comparateur C1, de l'amplitude du signal V img(V) avec la première valeur de de référence Ref1 ;
- E4 : comparaison, par le second comparateur C2, de l'amplitude du signal V img(i) avec la seconde valeur de de référence Ref2 ;
- E5 : surveillance, par le microcontrôleur 24, de l'état du signal de sortie du premier comparateur C1 et de l'état du signal de sortie du second comparateur C2 ;
- E6 : génération/émission d'un signal S_Alert indicateur d'un dysfonctionnement du système d'allumage 10 si la valeur de l'amplitude du signal V img(i) généré par le capteur de courant 22 est inférieure à la seconde valeur de référence Ref2 alors que la valeur de l'amplitude du signal image V img(V) généré par le capteur de tension 21 est supérieure à la première valeur de référence Ref1.

En reprenant les valeurs numériques données plus haut, le dispositif de contrôle 20 est, par exemple, configuré pour alerter d'un dysfonctionnement du système d'allumage 10 si l'intensité consommée par la bougie est inférieure à 50 A pour une tension d'excitation fournie par le dispositif excitateur supérieure à 700 V. Ainsi, la première valeur de référence Ref1 du comparateur est choisie de sorte à être représentative d'une tension d'environ 700 Volts et la seconde valeur de référence Ref2 est choisie de sorte à être représentative d'une intensité d'environ 50 Ampères.

De préférence, (non représentés sur les figures), l'ensemble de mesure comprend également un circuit conditionneur et un filtre passe bas arrangés entre chaque capteur et le comparateur associé audit capteur afin de mettre le signal généré par le capteur sous une forme exploitable.

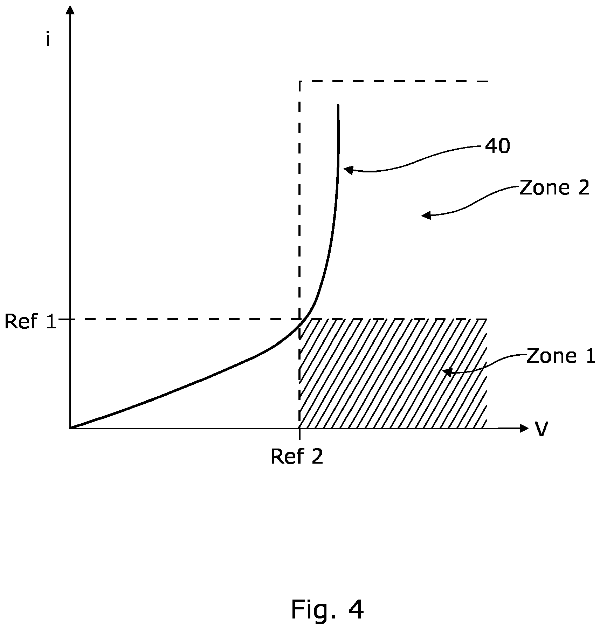

En référence avec la figure 4, le principe de détection d'un dysfonctionnement du système d'allumage 10 mis en œuvre par le dispositif de contrôle 20 consiste à déterminer un point de fonctionnement (intensité-potentiel) de la bougie 12 et à le comparer au profil électrique nominal de cette dernière (voir courbe 40). Le dispositif de contrôle 20 est configuré pour émettre le signal S_Alert alerte indicateur d'un dysfonctionnement du système d'allumage dans le cas où le point de fonctionnement de la bougie se trouve trop éloigné du profil électrique nominal 40.

Le dispositif de contrôle 20 vérifie ainsi la consommation par la bougie 12 de l'énergie libérée par le dispositif excitateur 11 et émet une alerte indicatrice d'un dysfonctionnement du système d'allumage 10 si l'analyse de signaux électriques prélevés au niveau de la bougie 12 démontre que le niveau l'énergie consommée par la bougie 12 se situe en deçà d'un certain seuil.

Un point de fonctionnement de la bougie qui se trouve trop éloigné (zone 1 sur la figure 4) du profil électrique nominal (zone 2 et courbe 40) peut révéler une dégradation de la bougie 12, mais aussi du dispositif excitateur 11, des liaison électriques 13,14, ainsi que de l'environnement du système d'allumage 10 (problème dans la chambre de combustion par exemple).

L'intégration d'un tel dispositif de contrôle 20 dans un système d'allumage 20 permet aux équipes de maintenance au sol de contrôler le fonctionnement de ce dernier plus aisément.

On notera que le capteur de tension 21 ou de courant 22 peut chacun être soit arrangé entre le dispositif excitateur 11 et la bougie 12 ou entre la bougie 12 et la structure de l'aéronef 6.

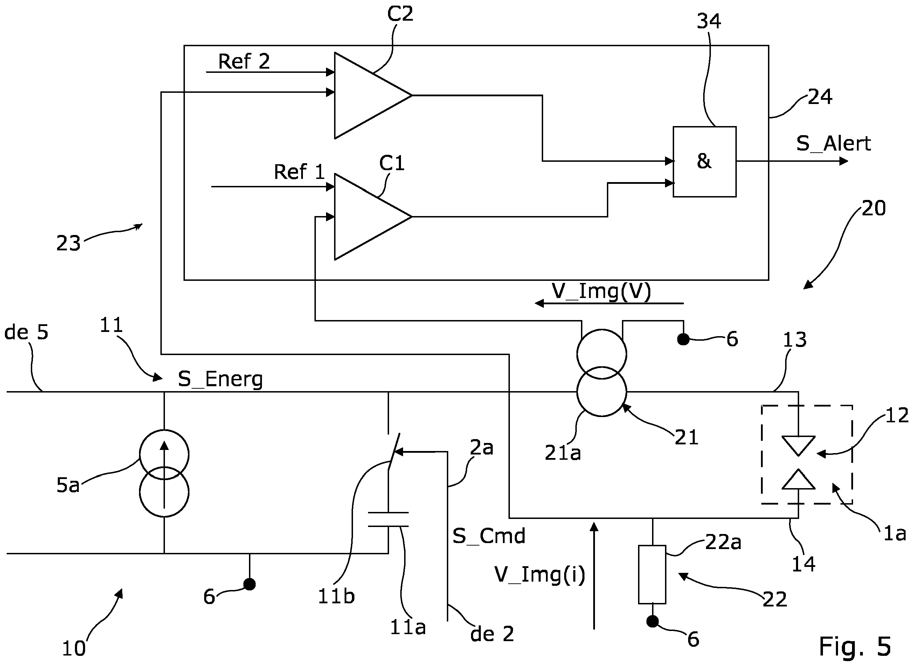

Dans un second mode de réalisation, et en relation avec la figure 5, le premier comparateur C1 et le second comparateur C2 sont réalisés via une programmation adéquate du microcontrôleur 24. Les valeurs de référence Ref1 et Ref2 sont également programmées dans le microcontrôleur 24. Le capteur de courant 22 et le capteur de tension 21 sont directement connectés au microcontrôleur et les capteurs sont dimensionnés pour fournir une tension de sortie admissible pour le microcontrôleur 24 (de l'ordre de 4 à 6 Volts, voir 3,3Volts pour certains microcontrôleurs).

Le microcontrôleur 24 met en œuvre, par exemple, une porte logique ET 34 recevant en entrée les signaux de sorties des comparateurs C1, C2. La porte logique ET génère un signal booléen S_Alert qui forme le signal de sortie du microcontrôleur. Le signal S_Alert est un signal :
- indicateur d'un dysfonctionnement (signal S_Alert mis à 1) du système d'allumage 10 si la valeur de l'amplitude du signal V img(i) généré par le capteur de courant 22 est inférieure à la seconde valeur de référence Ref2 quand la valeur de l'amplitude du signal V img(V) généré par le capteur de tension 21 est supérieure à la première valeur de référence Ref1.

De préférence, (non représentés sur les figures), un circuit conditionneur et un filtre passe bas sont arrangés entre chaque capteur 21,22 et le microcontrôleur 24 afin de mettre le signal image généré par le capteur 21,22 sous une forme exploitable par le microcontrôleur 24.

## Revendications

1. Système d'allumage (10) d'une turbomachine (1), ledit système comprenant une bougie d'allumage (12) ayant une borne dite d'excitation (12a) et une borne dite de retour (12b), un dispositif excitateur de la bougie (11) connectée à la borne d'excitation (12a) de la bougie (12), la borne de retour (12b) étant, un utilisation, connectée à une structure de la turbomachine (6) formant référence équipotentielle, le dispositif excitateur (11) étant, en utilisation, connecté à une ligne de commande (2a) et à une source d'alimentation électrique (5) fournissant un signal d'excitation à la bougie à la réception d'un signal d'excitation (S_Cmd) sur la ligne de commande (2a),
**caractérisé en ce que** le système d'allumage (10) comprend un dispositif de contrôle (20) comprenant un capteur de courant (22), un capteur de tension (21), un premier comparateur (C1) recevant en entrée un signal (V_img(V)) généré par le capteur de tension, un second comparateur recevant en entrée un signal (V_img(i)) généré par le capteur de courant, et un microcontrôleur (24) recevant la sortie des deux comparateurs (C1, C2), le premier comparateur (C1) étant configuré pour comparer la valeur de l'amplitude du signal (V_img(V)) généré par le capteur de tension (21) à une première valeur de référence (Ref1) et le second comparateur (C2) étant configuré pour comparer la valeur du signal (V_img(i)) généré par le capteur de courant (22) à une seconde valeur de référence (Ref2), le microcontrôleur (24) mettant en œuvre une porte logique ET dont la sortie est un signal (S Alert) indicateur d'un dysfonctionnement du système d'allumage (10) si la valeur de l'amplitude du signal (V_img(i)) généré par le capteur de courant (22) est inférieure à la seconde valeur de référence (Ref2) alors que la valeur de l'amplitude du signal (V_img(V)) généré par le capteur de tension (21) est supérieure à la première valeur de référence (Ref1).

2. Système d'allumage (10) selon la revendication 1, **caractérisé en ce que** le capteur de courant (22) comprend un shunt (22a).

3. Système d'allumage (10) selon l'une quelconque des revendications 1 à 2, **caractérisé en ce que** le capteur de tension (21) comprend un transformateur de tension (21a).

4. Système d'allumage (10) selon l'une quelconque des revendications 1 à 3, **caractérisé en ce que** le premier et le second comparateurs (C1, C2) sont analogiques, le microcontrôleur (24) est connecté à la sortie de chacun du premier comparateur (C1) et du second comparateur (C2) via un convertisseur analogique numérique (25,26).

5. Système d'allumage (10) selon l'une quelconque des revendications 1 à 3, **caractérisé en ce que** le premier et le second comparateur (C1, C2) sont numériques et réalisés via une programmation du microcontrôleur (24).

6. Procédé de détection d'un dysfonctionnement du système d'allumage (10) d'une turbomachine (1) mis en œuvre par un dispositif de contrôle (20), ledit système d'allumage comprenant une bougie d'allumage (12) ayant une borne dite d'excitation (12a) et une borne dite de retour (12b), un dispositif excitateur de la bougie (11) connectée à la borne d'excitation (12a) de la bougie (12), la borne de retour (12b) étant, un utilisation, connectée à une structure de la turbomachine (6) formant référence équipotentielle, le dispositif excitateur (11) étant, en utilisation, connecté à une ligne de commande (2a) et à une source d'alimentation électrique (5) fournissant un signal d'excitation à la bougie à la réception d'un signal d'excitation (S_Cmd) sur la ligne de commande (2a),
le dispositif de contrôle (20) comprenant un capteur de courant (22), un capteur de tension (21), un premier comparateur (C1) connecté au capteur de tension, un second comparateur (C2) connecté au capteur de courant, et un microcontrôleur (24) recevant la sortie des deux comparateurs (C1, C2),
**caractérisé en ce que** le procédé comprend les étapes suivantes de :
- mesure d'une tension (E1) par le capteur de tension (21), ledit capteur générant un signal (V_img(V)) image de ladite tension ;
- mesure d'un courant (E2) par le capteur de courant (22), ledit capteur générant un signal (V_img(i)) image dudit courant ;
- comparaison (E3), par le premier comparateur (C1), de l'amplitude du signal (V_img(V)) généré par le capteur de tension (21) avec une première valeur de de référence (Ref1) ;
- comparaison (E4), par le second comparateur (C2), de l'amplitude du signal (V img(i)) généré par le capteur de courant (22) avec une seconde valeur de de référence (Ref2) ;
- surveillance (E5), par le microcontrôleur (24), de l'état du signal de sortie du premier comparateur (C1) et de l'état du signal de sortie du second comparateur (C2) ;
- génération (E6), par le microcontrôleur, d'un signal (S_Alert) indicateur d'un dysfonctionnement du système d'allumage (10) si la valeur de l'amplitude du signal (V_img(i)) généré par le capteur de courant (22) est inférieure à la seconde valeur de référence (Ref2) alors que la valeur de l'amplitude du signal (V_img(V)) généré par le capteur de tension (21) est supérieure à la première valeur de référence (Ref1).

## Patentansprüche

1. Zündsystem (10) eines Turbotriebwerks (1), wobei das System eine Zündkerze (12) mit einem sogenannten Erregeranschluss (12a) und einem sogenannten Rücklaufanschluss (12b) sowie eine an den Erregeranschluss (12a) der Zündkerze (12) angeschlossene Erregervorrichtung (11) für die Zündkerze aufweist, wobei der Rücklaufanschluss (12b) im Gebrauch mit einer Struktur der Turbomaschine (6) verbunden ist, die eine Äquipotentialreferenz bildet, wobei die Erregervorrichtung (11) im Gebrauch mit einer Steuerleitung (2a) und einer elektrischen Stromversorgung (5) verbunden ist, die der Zündkerze nach Empfang eines Erregersignals (S_Cmd) auf der Steuerleitung (2a) ein Erregersignal liefert,
**dadurch gekennzeichnet, dass** das Zündsystem (10) eine Steuervorrichtung (20) aufweist, die einen Stromsensor (22) aufweist, einen Spannungssensor (21), einen ersten Komparator (C1), der am Eingang ein von dem Spannungssensor erzeugtes Signal (V_img(V)) empfängt, einen zweiten Komparator, der am Eingang ein von dem Stromsensor erzeugtes Signal(V_img(i)) empfängt, und einen Mikrocontroller (24), der den Ausgang der beiden Komparatoren (C1, C2) empfängt, wobei der erste Komparator (C1) ausgebildet ist, um den Wert der Amplitude des Signals (V_img(V)), das von dem Spannungssensor (21) erzeugt wird, mit einem ersten Referenzwert (Ref1) zu vergleichen, und der zweite Komparator (C2) ausgebildet ist, um den Wert der Amplitude des Signals (V_img(i)), das von dem Stromsensor (22) erzeugt wird, mit einem zweiten Referenzwert (Ref2) zu vergleichen, wobei der Mikrocontroller (24) ein UND-Logikgatter realisiert, dessen Ausgang ein Signal (S_Alert) ist, das eine Fehlfunktion des Zündsystems (10) anzeigt, wenn der Wert der Amplitude des von dem Stromsensor (22) erzeugten Signals (V_Img (i)) kleiner ist als der zweite Referenzwert (Ref2), während der Wert der Amplitude des von dem Spannungssensor (21) erzeugten Signals (V_Img (V)) größer ist als der erste Referenzwert (Refl).

2. Zündsystem (10) nach Anspruch 1, **dadurch gekennzeichnet, dass** der Stromsensor (22) einen Shunt (22a) aufweist.

3. Zündsystem (10) nach einem der Ansprüche 1 bis 2, **dadurch gekennzeichnet, dass** der Spannungssensor (21) einen Spannungswandler (21a) aufweist.

4. Zündsystem (10) nach einem der Ansprüche 1 bis 3, **dadurch gekennzeichnet, dass** der erste und der zweite Komparator (C1, C2) analog sind und dass der Mikrocontroller (24) über jeweils einen Analog-DigitalWandler (25, 26) mit dem Ausgang des ersten Komparators (C1) und dem des zweiten Komparators (C2) verbunden ist.

5. Zündsystem (10) nach einem der Ansprüche 1 bis 3, **dadurch gekennzeichnet, dass** der erste und der zweite Komparator (C1, C2) digital sind und durch Programmieren des Mikrocontrollers (24) realisiert werden.

6. Verfahren zum Erkennen einer Fehlfunktion des Zündsystems (10) eines Turbotriebwerks (1), das durch eine Steuervorrichtung (20) realisiert wird, wobei das Zündsystem eine Zündkerze (12) mit einem sogenannten Erregeranschluss (12a) und einem sogenannten Rücklaufanschluss (12b) sowie eine an den Erregeranschluss (12a) der Zündkerze (12) angeschlossene Erregervorrichtung (11) für die Zündkerze aufweist, wobei der Rücklaufanschluss (12b) im Gebrauch mit einer Struktur der Turbomaschine (6) verbunden ist, die eine Äquipotentialreferenz bildet, wobei die Erregervorrichtung (11) im Gebrauch mit einer Steuerleitung (2a) und einer elektrischen Stromversorgung (5) verbunden ist, die der Zündkerze nach Empfang eines Erregersignals (S_Cmd) auf der Steuerleitung (2a) ein Erregersignal liefert,
wobei die Steuervorrichtung (20) einen Stromsensor (22) aufweist, einen Spannungssensor (21), einen ersten Komparator (C1), der an den Spannungssensor angeschlossen ist, einen zweiten Komparator (C2), der an den Stromsensor angeschlossen ist, und einen Mikrocontroller (24), der den Ausgang der beiden Komparatoren (C1, C2) empfängt,
**dadurch gekennzeichnet, dass** das Verfahren die folgenden Schritte aufweist:
- Messen einer Spannung (E1) durch den Spannungssensor (21), wobei der Sensor ein Signal (V_img (V)) erzeugt, das die Spannung abbildet;
- Messen eines Stroms (E2) durch den Stromsensor (22), wobei der Sensor ein Signal (V_img (i)) erzeugt, das den Strom abbildet;
- Vergleichen (E3) der Amplitude des vom Spannungssensor (21) erzeugten Signals (V img (V)) durch den ersten Komparator (C1) mit einem ersten Referenzwert (Ref1);
- Vergleichen (E4) der Amplitude des vom Stromsensor (22) erzeugten Signals (V_img (i)) durch den zweiten Komparator (C2) mit einem zweiten Referenzwert (Ref2);
- Überwachen (E5) des Zustands des Ausgangssignals des ersten Komparators (C1) und des Zustands des Ausgangssignals des zweiten Komparators (C2) durch den Mikrocontroller (24);
- Erzeugen (E6) eines Signals (S Alert) durch den Mikrocontroller, das eine Fehlfunktion des Zündsystems (10) anzeigt, wenn der Wert der Amplitude des von dem Stromsensor (22) erzeugten Signals (V_Img (i)) kleiner ist als der zweite Referenzwert (Ref2), während der Wert der Amplitude des von dem Spannungssensor (21) erzeugten Signals (V_Img (V)) größer ist als der erste Referenzwert (Ref1).

## Claims

1. Ignition system (10) of a turbine engine (1), said system comprising an ignition plug (12) having a so-called excitation terminal (12a) and a so-called return terminal (12b), an exciter device of the plug (11) connected to the excitation terminal (12a) of the plug (12), the return terminal (12b) being, in use, connected to a structure of the turbine engine (6) forming an equipotential reference, the exciter device (11) being, in use, connected to a command line (2a) and to an electrical power source (5) supplying an excitation signal to the plug on receipt of an excitation signal (S_Cmd) over the command line (2a),
**characterized in that** the ignition system (10) comprises a control device (20) comprising a current sensor (22), a voltage sensor (21), a first comparator (C1) receiving as input a signal (V_img(V)) generated by the voltage sensor, a second comparator receiving as input a signal (V_img(i)) generated by the current sensor, and a microcontroller (24) receiving the output from the two comparators (C1, C2), the first comparator (C1) being configured to compare the value of the amplitude of the signal (V_img(V)) generated by the voltage sensor (21) to a first reference value (Ref1) and the second comparator (C2) being configured to compare the value of the signal (V_img(i)) generated by the current sensor (22) to a second reference value (Ref2), the microcontroller (24) implementing an AND logic gate whose output is a signal (S Alert) indicative of malfunction of the ignition system (10) if the value of the amplitude of the signal (V_img(i)) generated by the current sensor (22) is lower than the second reference value (Ref2) while the value of the amplitude of the signal (V_img(V)) generated by the voltage sensor (21) is higher than the first reference value (Ref1) .

2. Ignition system (10) according to Claim 1, **characterized in that** the current sensor (22) comprises a shunt (22a).

3. Ignition system (10) according to either one of Claims 1 and 2, **characterized in that** the voltage sensor (21) comprises a voltage transformer (21a)

4. Ignition system (10) according to any one of Claims 1 to 3, **characterized in that** the first and the second comparators (C1, C2) are analogue, the microcontroller (24) is connected to the output of each of the first comparator (C1) and the second comparator (C2) via an analogue/digital converter (25, 26) .

5. Ignition system (10) according to any one of Claims 1 to 3, **characterized in that** the first and the second comparators (C1, C2) are digital and realized via a programming of the microcontroller (24) .

6. Method for detecting a malfunction of the ignition system (10) of a turbine engine (1) implemented by a control device (20), said ignition system comprising an ignition plug (12) having a so-called excitation terminal (12a) and a so-called return terminal (12b), an exciter device of the plug (11) connected to the excitation terminal (12a) of the plug (12), the return terminal (12b) being, in use, connected to a structure of the turbine engine (6) forming an equipotential reference, the exciter device (11) being, in use, connected to a command line (2a) and to an electrical power source (5) supplying an excitation signal to the plug on receipt of an excitation signal (S_Cmd) over the command line (2a),
the control device (20) comprising a current sensor (22), a voltage sensor (21), a first comparator (C1) connected to the voltage sensor, a second comparator (C2) connected to the current sensor, and a microcontroller (24) receiving the output from the two comparators (C1, C2),
**characterized in that** the method comprises the following steps of:
- measurement of a voltage (E1) by the current sensor (21), said sensor generating a signal (V_img(V)) that is an image of said voltage;
- measurement of a current (E2) by the current sensor (22), said sensor generating a signal (V_img(i)) that is an image of said current;
- comparison (E3), by the first comparator (C1) of the amplitude of the signal (V_img(V)) generated by the voltage sensor (21) with a first reference value (Ref1);
- comparison (E4), by the second comparator (C2), of the amplitude of the signal (V_img(i)) generated by the current sensor (22) with a second reference value (Ref2);
- monitoring (E5), by the microcontroller (24), of the state of the output signal of the first comparator (C1) and of the state of the output signal of the second comparator (C2);
- generation (E6), by the microcontroller, of a signal (S Alert) indicative of a malfunction of the ignition system (10) if the value of the amplitude of the signal (V_img(i)) generated by the current sensor (22) is lower than the second reference value (Ref2) while the value of the amplitude of the signal (V_img(V)) generated by the voltage sensor (21) is higher than the first reference value (Ref1) .
